Europäisches Patentamt

European Patent Office

Office européen des brevets

(11) Veröffentlichungsnummer: **0 292 721**
**A2**

## EUROPÄISCHE PATENTANMELDUNG

(21) Anmeldenummer: **88106794.6**

(22) Anmeldetag: **28.04.88**

(51) Int. Cl.⁴: **B23B 31/04 , B23C 5/26**

(30) Priorität: **27.05.87 DE 8707627 U**
**27.06.87 DE 8708935 U**

(43) Veröffentlichungstag der Anmeldung:
**30.11.88 Patentblatt 88/48**

(84) Benannte Vertragsstaaten:
**AT CH FR GB IT LI SE**

(71) Anmelder: **Ledermann GmbH & Co.**
**Stadionstrasse 2-2a**
**D-7240 Horb am Neckar(DE)**

(72) Erfinder: **Katz, Otto**
**Hohenzollernring 18**
**D-7240 Horb 1(DE)**

(74) Vertreter: **Ott, Elmar, Dipl.-Ing.**
**Kappelstrasse 8**
**D-7240 Horb 1(DE)**

(54) Spann- und Zentriereinrichtung.

(57) Es wird eine Spann- und Zentriereinrichtung für die Aufnahme eines Werkzeugs mit Aufnahmebohrung, insbesondere eines Sägeblatts, Fräsers oder Zerspaners vorgeschlagen, die am Werkzeug oder einer Werkzeugaufnahme formschlüssig eingreift und gegen die Federkraft eines Federelements lösbar ist. Die Arretierung kann dabei als Bajonettverschluß ausgebildet sein, der ein schnelles Spannen und Lösen ermöglicht und außerdem eine spielfreie Zentrierung gewährleistet.

*FIG. 1*

EP 0 292 721 A2

## Spann- und Zentriereinrichtung

Die Erfindung betrifft eine Spann- und Zentriereinrichtung gemäß der Gattung des Hauptanspruchs.

Bei bekannten Spanneinrichtungen werden blattartige Werkzeugkörper durch eine sogenannte Ringschulter gegen ein Verschieben in radialer Richtung gesichert. Ringförmige Halteteile dienen zur axialen Sicherung. Diese bekannten Sicherungseinrichtungen erfordern eine Vielzahl von Bauteilen und erfordern somit einen hohen Herstellungs- und Montageaufwand. Außerdem sind diese Bauteile für eine schnelles Wechseln des Werkzeugkörpers hinderlich, so daß nur mit einem entsprechend großen Zeitaufwand ein Auswechseln der Werkzeuge vorgenommen werden kann.

Der Erfindung liegt die Aufgabe zugrunde, eine Spann- und Zentriereinrichtung zu schaffen, die ein zentrisches und spielfreies Spannen mit geringem Arbeitsaufwand ermöglicht.

Die Lösung dieser Aufgabe wird durch die im Hauptanspruch angegebenen Merkmale erhalten. Durch die Verwen dung einer formschlüssigen Arretierung, die gegen eine Federkraft lösbar ist, ist auf einfache Weise ein schneller Werkzeugwechsel möglich und das jeweils montierte Werkzeug ist axial und in Drehrichtung gesichert. Wird als Werkzeugaufnahme beispielsweise eine Spannbuchse verwendet, so dann das Werkzeug außerhalb der Maschine in der Höhe ausgerichtet werden. Als Spannbuchse wird in diesem Fall eine Hydraulik-Dehnspannbuchse als geschlossenes oder offenes Hydrauliksystem verwendet, die schnell und präzise mittels eines Bajonett-Verschlusses zur Sicherung in axialer und radialer Richtung verriegelt werden kann. Eine Vertiefung von 0,8 bis 1 mm in der Werkzeugaufnahme garantiert einen exakten Formschluß durch ein Absenken des an der Werkzeugaufnahme angreifenden Arretierelements. Beim offenen System kann die Druckeinleitung durch eine Fettpresse, während beim geschlossenen System diese mittels Spannschraube erfolgen kann. Nach Druckentlastung kann das Werkzueg rasch und problemlos von der Maschinenspindel abgezogen werden.

Die axial federnd ausgebildeten Arretierelemente können motorseitig oder an der Werkzeugaufnahme angeordnet sein und greifen in entsprechende Aussparungen oder Vertiefungen am gegenüberliegenden Teil ein.

Besonders vorteilhaft ist es, das Arretierelement als einen Bolzen mit einem an seinem abstehenden Ende ausgebildeten Rastrand auszubilden, wobei am anderen Ende des Bolzens eine Druckfeder seitlich in spitzem Winkel angreift und den Bolzen in der Einraststellung hält. Mittels eines Keils oder einer Klinke kann der Bolzen an einer Abdrückfläche gegen die Federkraft in die Entriegelungsposition gebracht werden.

Das Arretierelement kann auch als Rastklinke oder in Form von innerhalb der Spindel angeordneten Spann- und Lösungselementen ausgebildet sein.

Vorteilhafte Weiterbildungen der Erfindung sind in den Unteransprüchen gekennzeichnet.

Eine vorteilhafte Weiterbildung der Erfindung sieht vor, daß ein in der Maschinenspindel eingeschraubtes Vestellelement durch eine Kontermutter gesichert und mit wenigstens einem quer zur Mittelachse angebrachten Arretierstift versehen ist, zusammen mit einer Arretierscheibe eine Formschlußsicherung in axialer und radialer Richtung für die Spann- und Zentriereinrichtung bildet, wobei sich die Arretierscheibe federnd an der Werkzeugaufnahme abstützt. Ein auf der Maschinenspindel zu montierendes Werkzeug kann somit zusammen mit einer Spannbuchse, die mehrere Stehbolzen im Zusammenhang mit Druckfedern zur Halterung des Arretierscheibe aufweist, auf die Maschinenspindel geschoben werden. Das Verstellelement wird dabei mit dem Arretierstift durch Durchstecknuten eingeführt und durch eine Verdrehung um 90° in Verriegelungstaschen verriegelt. Dannach kann die Druckeinleitung in die Spannbuchse erfolgen.

Die erfindungsgemäße Spann- und Zentriereinrichtung besitzt einen einfachen Aufbau und ermöglicht eine problemlose Handhabung, wodurch ein schnelles Auswechseln des Werkzeugs erfolgen kann. Als Werkzeug kann beispielsweise ein Sägeblatt, welches zwischen einem Anlagering und einer Spannbuchse eingespannt wird, oder ein auf der Spannbuchse zu montierender Fräser oder Zerspaner Verwendung finden.

Die Erfindung wird nachfolgend anhand der Zeichnungen näher erläutert. Es zeigen:

Figur 1 eine erfindungsgemäße Spann- und Zentriereinrichtung, teilweise im Axialschnitt,

Figur 2 ein entsprechendes Ausführungsbeispiel mit einem Entriegelungselement,

Figur 3 eine Ausführung mit einem in der Spannbuchse befindlichen Arretierelement,

Figur 4 und Figur 5 weitere Ausführungsbeispiele federnd angeordneter Arretierelemente,

Figur 6 eine Ausführung mit einem als Entriegelungsklinke ausgebildeten Arretierelement

Figur 7 ein Ausführungsbeispiel, bei dem die Arretierelemente innerhalb der Antriebsspindel angeordnet sind, und

Figur 8 ein weiteres Ausführungsbeispiel mit einer Arretierscheibe.

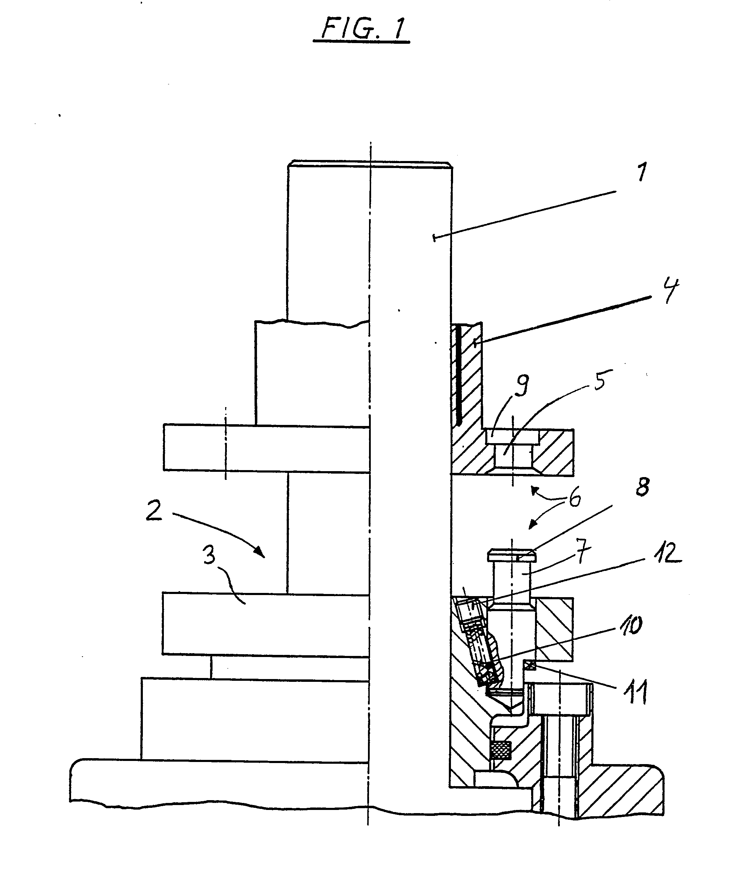

Figur 1 zeigt eine motorgetriebene Maschinenspindel 1, auf der motorenseitig eine Arretiereinrichtung 2 vorgesehen ist, die einen Anlagering 3 hat. Am Ende der Spindel 1 ist eine Spannbuchse 4 aufgeschoben, die eine Aussparung 5 besitzt, die Teil eines Bajonettverschlusses 6 ist. Ein Bolzen 7 ist als federndes Arretierelement vorgesehen und hat an seinem oberen Ende einen Rastrand 8, mit dem er in eine entsprechende Vertiefung 9 an der Spannbuchse 4 formschlüssig eingreifen kann. Der Bolzen 7 wird mittels eines Federelementes 10 nach unten in die dargestellte Stellung gedrückt. Ein seitlich an einer Abdrückfläche 11 angreifendes Entriegelungselement kann den Bolzen 7 im verriegelten Zustand nach oben drücken, wodurch er in die Ent-riegelungsposition gelangt.

Im verriegelten Zustand befindet sich zwischen dem An lagering 3 und der Spannbuchse 4 das jeweils eingesetzte Werkzeug, welches beispielsweise ein Sägeblatt sein kann. Die Spannbuchse 4 befindet sich dann in geringem Abstand vom Anlagering 3 und liegt am hier nicht dargestellten Sägeblatt an.

Das Federelement 10 befindet sich in einer Bohrung, die von einem Gewindestift 12 nach außen abgeschlossen ist. Durch Eindrehen des Gewindestiftes 12 kann die auf den Bolzen 7 wirkende Federkraft erhöht werden.

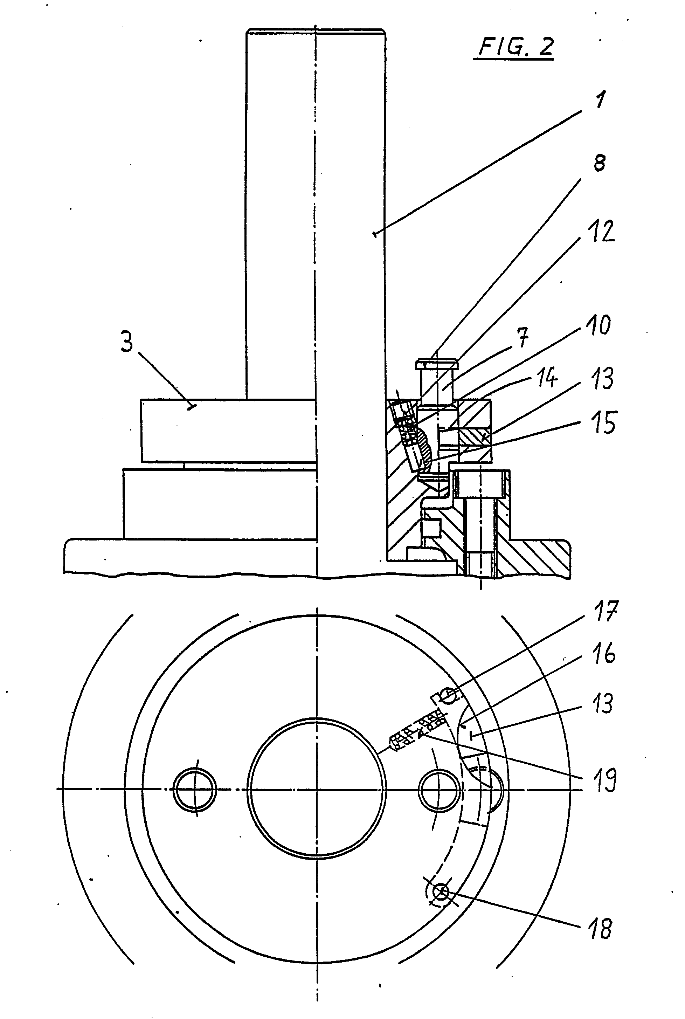

In Figur 2 ist als Entriegelungselement eine Entriegelungsklinke 13 dargestellt, die an einer Aussparung 14 am Bolzen 7 angreift. Das Federelement 10 ist hier als Druckfeder ausgebildet, die über einen Druckbolzen 15 in spitzem Winkel am Bolzen 7 angreift.

Figur 2 zeigt in der unten angegebenen Draufsicht insbesondere die Entriegelungsklinke 13, eine Aussparung 16, zwei Zylinderstifte 17, 18 sowie eine Druckfeder 19.

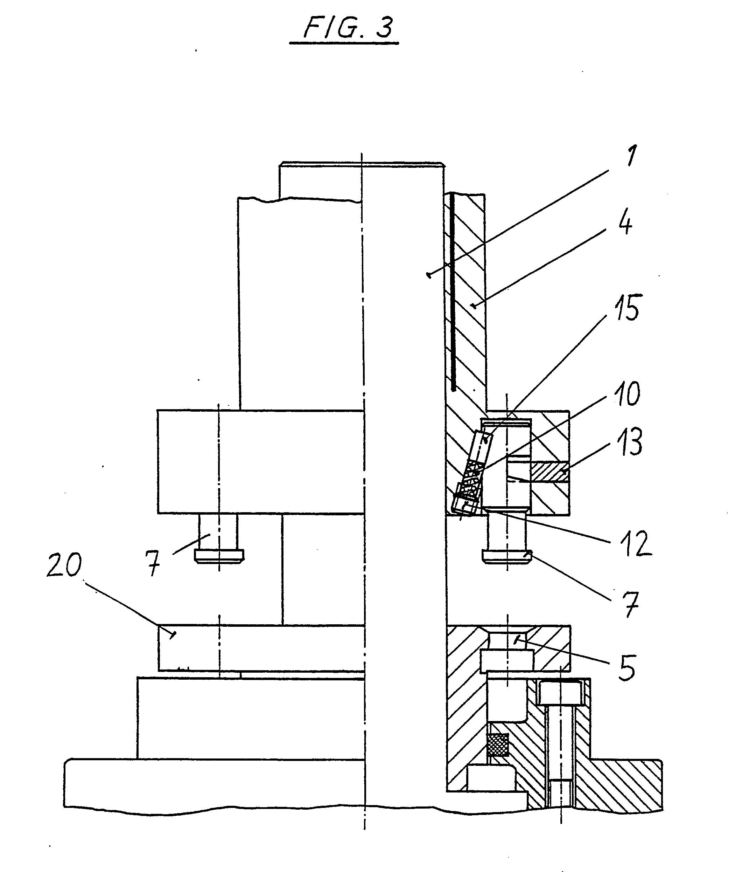

Bei der in Figur 3 dargestellten Spann- und Zentriereinrichtung sind die Arretierelemente an der Spannbuchse 4 angeordnet. Die zugehörigen Aussparungen 5 befinden sich an einem Arretierring 20, der den Anlagering bildet. Im Arretierring 20 befinden sich bajonettverschlußähnliche Durchstecköffnungen 5, die ein Verriegeln der als Bolzen 7 ausgebildeten Arretierelemente ermöglichen.

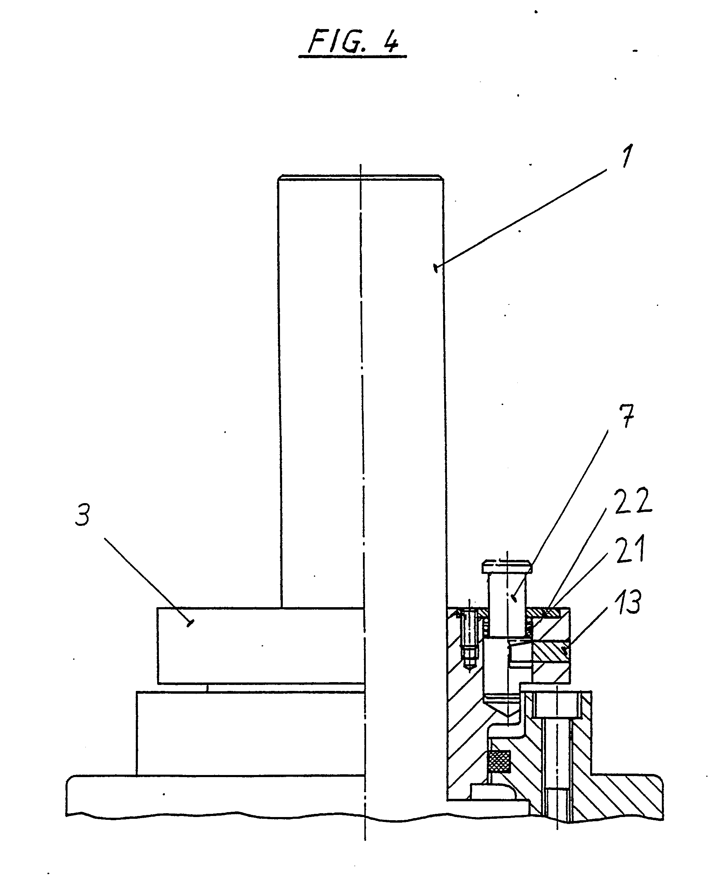

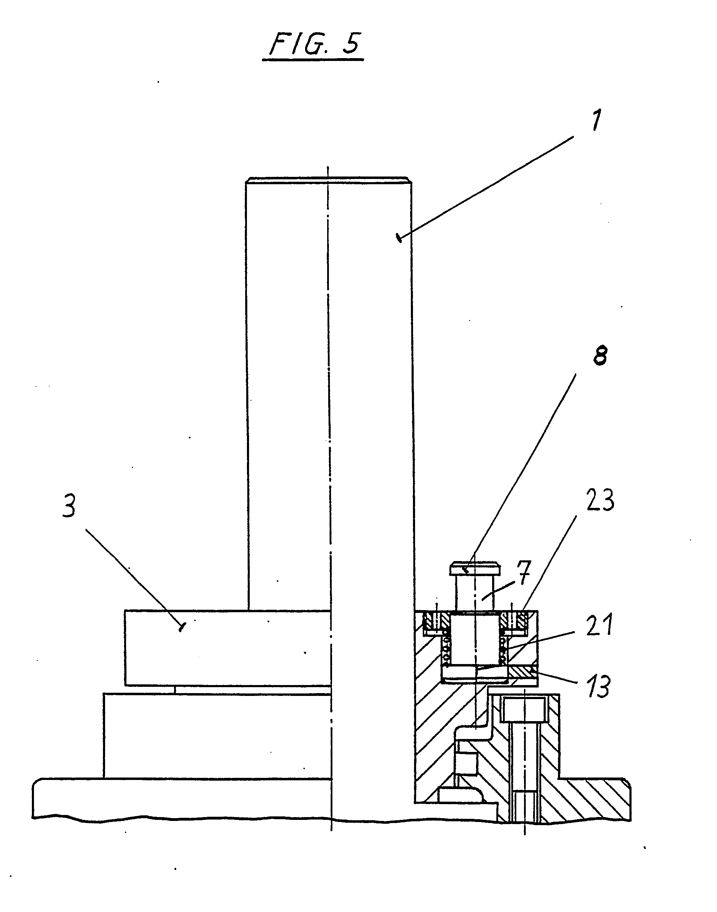

Bei den in Figur 4 und Figur 5 dargestellten Ausführungsformem sind Druckfedern 21 vorgesehen, die in Figur 4 an einer Abdeckscheibe 22 und in Figur 5 an einem Gewindering 23 anliegen. In Figur 5 greift die Entriegelungsklinke 13 unterhalb des Bolzens 7 an während in Figur 4 die Entriegelungsklinke 13 in eine Aussparung am Bolzen 7 eingreift.

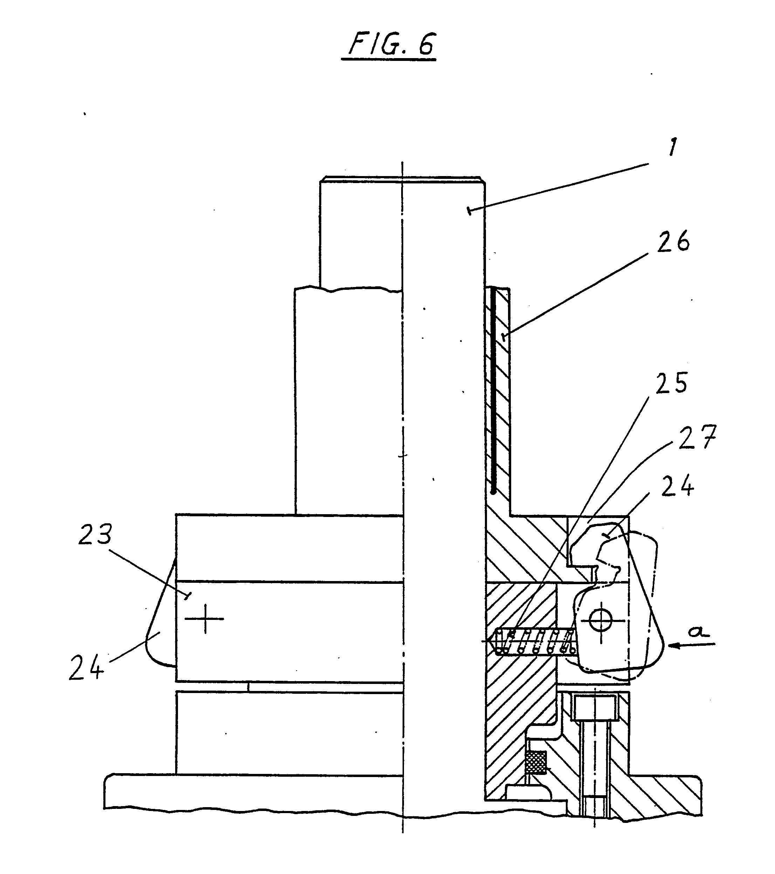

In Figur 6 ist eine Spann- und Zentriereinrichtung dargestellt, bei der die am Anlagering 23 vorgesehene Arretiereinrichtung eine Entriegelungsklinke 24 besitzt, die mittels einer Druckfeder 25 in der verriegelten Stellung gehalten wird. Die Spannbuchse 26 weist eine entsprechende Aussparung 27 auf, in die die Entriegelungsklinke 24 eingreift. Durch Druck von außen in Pfeilrichtung a läßt sich die Arretiereinrichtung entriegeln.

Die Spannbuchse 26 bildet hier die Werkzeugaufnahme, die beispielsweise einen Fräser oder einen Zerspaner aufnehmen kann.

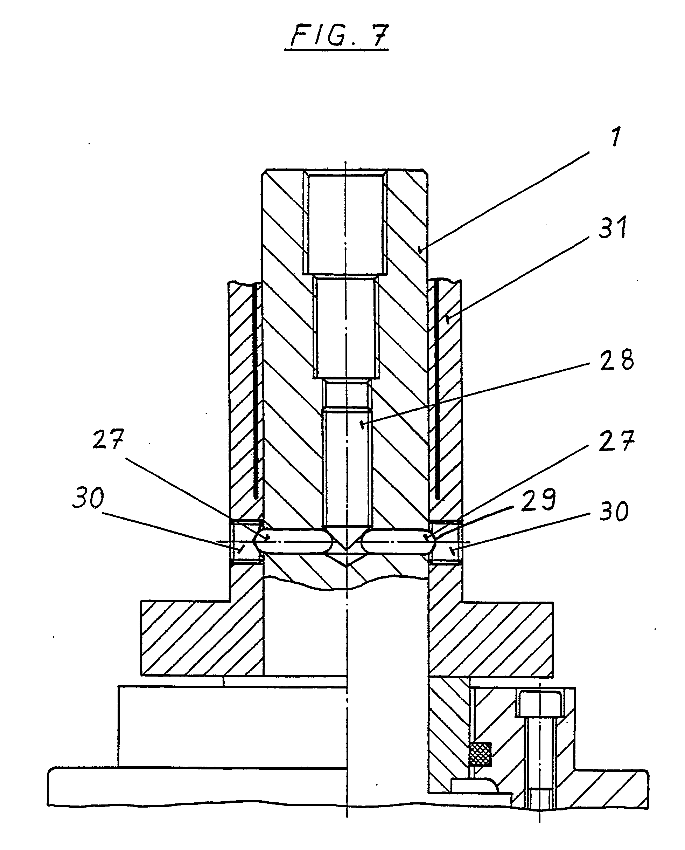

Figur 7 zeigt eine Spann- und Zentriereinrichtung, bei der die Arretierelemente 27 innerhalb der Maschinenspindel 1 angeordnet sind und mittels eines Gewindestiftes 28 nach außen auf die Formschlußöffnungen 29 von Gewindestiften 30 drücken. Die Gewindestifte 30 sind in Gewindebohrungen der Spannbuchse 31 eingesetzt. Auch in diesem Ausführungsbeispiel dient die Spannbuchse 31 als Werkzeugaufnahme für entsprechend ausgebildete Bohrungswerkzeuge.

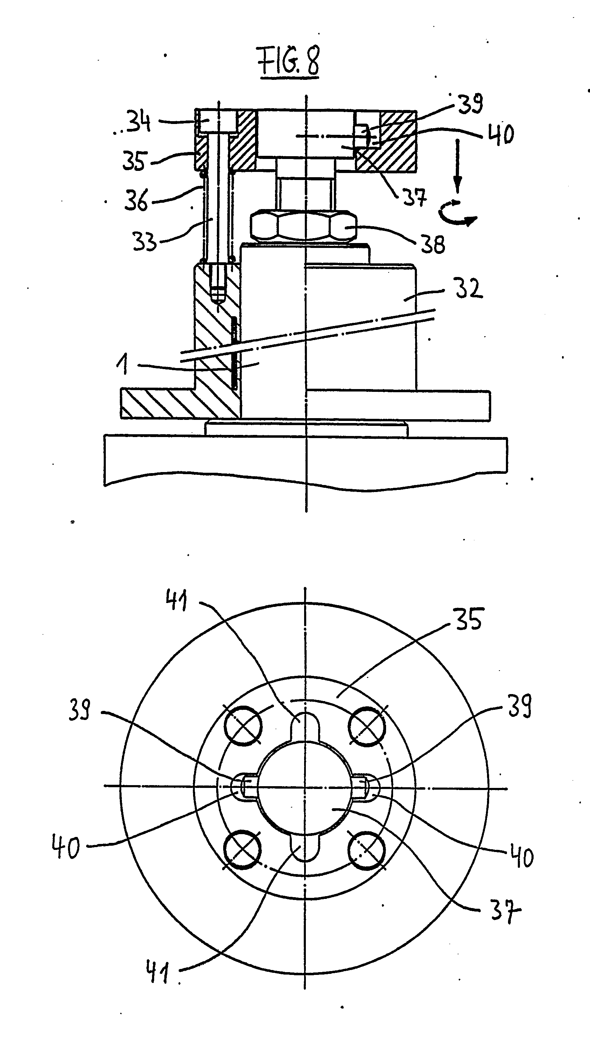

In Figur 8 ist ein Ausführungsbeispiel angegeben, welches eine Spannbuchse 32 besitzt, an der Stehbolzen 33 abstehen. Der Stehbolzenkopf 34 greift in eine entsprechende Bohrung einer Arretierscheibe 35 ein, die über Druckfedern 36 sich an der Spannbuchse 32 abstützt. Ein an der Maschinenspindel 1 eingeschraubtes Verstellelement 37 ist mittels einer Kontermutter 38 gesichert. Das Verstellelement 37 greift mittels zweier Arretierstifte 39 in Verriegelungstaschen 40 an der Arretierscheibe 35 ein. An der Arretierscheibe sind zur Durchführung der Arretierstifte 39 zwei Durchstecknuten 41 ausgebildet, die gegenüber den Verriegelungstaschen 40 um 90° versetzt angeordnet sind.

Ist die Spannbuchse 32 mit Arretierscheibe 35 in der in der Zeichnung dargestellten Art und Weise auf die Maschinenspindel 1 aufgesetzt, so kann die Druckeinleitung in die Spannbuchse 32 in an sich bekannter Weise erfolgen, wodurch ein sicheres Verspannen eines auf der Spannbuchse 32 aufgesetzten Werkzeuges mit der Maschinenspindel erreicht wird.

## Ansprüche

1. Spann- und Zentriereinrichtung für die Aufnahme eines Werkzeugs mit Aufnahmebohrung, insbesondere eines Sägeblatts, Fräsers oder Zerspaners, das mittels einer an der Maschinenspindel (1) angeordneten Arretierung (7) in Drehrichtung arretierbar ist, **dadurch gekennzeichnet**, daß die Arretierung am Werkzeug und/oder an einer Werkzeugaufnahme (4) formschlüssig eingreift und gegen die Federkraft eines Federelements (10) lösbar ist.

2. Einrichtung nach Anspruch 1, **dadurch gekennzeichnet**, daß die Arretierung als Bajonettverschluß (6) mit einem axial federnd angeordneten Arretierelement (7) ausgebildet ist.

3. Einrichtung nach Anspruch 2, **dadurch gekennzeichnet**, daß das Arretierelement motorseitig oder an einer Werkzeugaufnahme angeordnet ist.

4. Einrichtung nach einem der Ansprüche 2 oder 3, **dadurch gekennzeichnet**, daß das Arretierelement ein Bolzen (7) mit einem an seinem abstehenden Ende ausgebildeten Rastrand (8) ist, und daß am anderen Ende des Bolzens (7) eine Druckfeder (10) seitlich in spitzem Winkel angreift.

5. Einrichtung nach Anspruch 4 , **dadurch gekennzeichnet**, daß die Arretierung durch eine Druckfeder (10, 25) in axialer Richtung gesichert ist.

6. Einrichtung nach einem der vorhergehenden Ansprüche, **dadurch gekennzeichnet**, daß am Arretierelement eine Abdrückfläche (11) ausgebildet ist, an der ein Entriegelungselement (13) angreift.

7. Einrichtung nach Anspruch 1, **dadurch gekennzeichnet**, daß als Arretierelement eine axial ausgerichtete, verschwenkbare Entriegelungsklinke (24) vorgesehen ist, die in eine an der Werkzeugaufnahme ausgebildete Aussparung (27) eingreift.

8. Einrichtung nach Anspruch 1, **dadurch gekennzeichnet**, daß in der Maschinenspindel (1) radial an der Werkzeugaufnahme angreifende Spann-und Lösungselemente (27) vorgesehen sind.

9. Einrichtung nach einem der vorhergehenden Ansprüche, **dadurch gekennzeichnet**, daß die Arretierung durch einen federnd angeordneten Bolzen gesichert ist.

10. Spann- und Zentriereinrichtung nach einem der Ansprüche 1 bis 3, **dadurch gekennzeichnet**, daß ein in der Maschinenspindel (1) eingeschraubtes Verstellelement (37) durch eine Kontermutter (38) gersichert und mit wenigstens einem quer zur Mittelachse angebrachten Arretierstift (39) versehen ist, zusammen mit einer Arretierscheibe (35) eine Formschlußsicherung in axialer und radialer Richtung für die Spann- und Zentriereinrichtung bildet, wobei sich die Arretierscheibe (35) federnd an der Werkzeugaufnahme (32) abstützt.

11. Einrichtung nach einem der vorhergehenden Ansprüche, **dadurch gekennzeichnet**, daß das Ver- und Entriegeln durch Druckeinleitung mittels Fettpresse oder durch eine Spannschraube erfolgt.

## FIG. 1

0 292 721

FIG. 2

## FIG. 3

## FIG. 4

# FIG. 5

## FIG. 6

0 292 721

## FIG. 7

## FIG. 8